# EUROPEAN PATENT APPLICATION

(11) **EP 3 477 532 A1**
(43) Date of publication of application: **01.05.2019**
(21) Application number: 17306494.0
(22) Date of filing: 31.10.2017
(51) Int. Cl.: G06F 21/84, G06F 12/14, G06F 21/60, H04L 9/16

(54) **METHOD FOR SECURING A DISPLAY OF SENSITIVE DATA BY A GRAPHICS PROCESSING UNIT OF AN ELECTRONIC DEVICE**

(71) Applicant: GEMALTO SA, 92190 Meudon (FR)
(72) Inventor: FOKLE, Milas, 92190 Meudon (FR); LOUBET MOUNDI, PHILIPPE, 92190 Meudon (FR)
(74) Representative: Bricks, Amélie

(57) **Abstract**

The present invention relates to a method for securing a display of sensitive data on a display device by a graphics processing unit (GPU) (2) of an electronic device, said display being triggered by a user application (9) executed by a central processing unit (CPU) (4) of said electronic device and calling a display function of a graphics library (10), said electronic device comprising a tamper resistant secure element (SE) (5), an unprotected GPU memory (7) accessible by the graphics processing unit (GPU), the secure element and the central processing unit (CPU) and a protected GPU memory (8) only accessible by the graphics processing unit (GPU) and by said secure element, said method comprising, performed by said secure element (5), the steps of :
- in response to the triggering of the display of said sensitive data by the user application (9), providing (S2) said user application with an encryption function enabling said user application to encrypt said sensitive data,
- reading (S6), in the unprotected GPU memory (7), encrypted display data generated by said display function of the graphics library from said encrypted sensitive data,
- decrypting (S7) said encrypted display data to generate decrypted display data,
- writing (S8) the decrypted display data in the protected GPU memory (8),
such that the graphics processing unit (GPU) (2) accesses said decrypted display data in the protected GPU memory (8) and displays it on the display device.

## Description

### FIELD OF THE INVENTION

The present invention relates to means for ensuring the confidentiality of digital data being displayed and more particularly to a method protecting such data from any unauthorized reading or copy by any application other than the application triggering the display.

### BACKGROUND OF THE INVENTION

Computer systems are more and more used for displaying sensitive information. In many cases, the confidentiality of such sensitive information shall be protected, such as in the case of medical information displayed to a patient or a doctor, or in the case of financial information displayed to a bank client or in a business meeting. In the case of the video playback of a movie paid for by a client, displayed data shall be protected in order to avoid any unauthorized copy of the movie. In the case of a banking application, sensitive information such as transaction information is displayed to a user for approval and such data shall be protected against modification by any application other than the banking application, in order to prevent displaying a fake transaction amount to the user.

In a usual computer system, the display of data is performed by a graphics processing unit (GPU). Such a display may be triggered by an application, such as a banking application, run by the central processing unit (CPU) of the system. When triggering the display of sensitive information, the application may call a function of a shared library, particularly of a graphics library providing complex display functions to the applications run by the CPU. Such a function generates in return display data that are stored in a frame buffer before being passed on to the GPU by the GPU driver of the system.

In such a system, an attacker has multiple ways to get access to data whose display is triggered by an application, either for reading or modifying it. First, he may simply access such data in the frame buffer itself. He may also get access to the data provided by the application to the shared library, for example by loading a rogue version of the library on the system and then performing library hooking.

As a result, there is a strong need for protecting data whose display is triggered by an application against any unauthorized reading or modification, from the display trigger by the application up to their display by the GPU. There is also a need that such a protection has a limited computational cost for the CPU and the GPU of the system in order to avoid any performance drop.

### SUMMARY OF THE INVENTION

For this purpose and according to a first aspect, this invention therefore relates to a method for securing a display of sensitive data on a display device by a graphics processing unit of an electronic device,
said display being triggered by a user application executed by a central processing unit of said electronic device and calling a display function of a graphics library,
said electronic device comprising a tamper resistant secure element, an unprotected GPU memory accessible by the graphics processing unit, the secure element and the central processing unit and a protected GPU memory only accessible by the graphics processing unit and by said secure element,
said method comprising, performed by said secure element, the steps of:
- in response to the triggering of the display of said sensitive data by the user application, providing said user application with an encryption function enabling said user application to encrypt said sensitive data,
- reading, in the unprotected GPU memory, encrypted display data generated by said display function of the graphics library from said encrypted sensitive data,
- decrypting said encrypted display data to generate decrypted display data,
- writing the decrypted display data in the protected GPU memory,
such that the graphics processing unit (GPU) accesses said decrypted display data in the protected GPU memory and displays it on the display device.

It enables to protect by encryption any sensitive data to be displayed by the GPU, without any significant cost for the GPU since decryption is performed by the secure element.

In an embodiment wherein said electronic device comprises further a secure storage area storing key indexes associated to symmetric keys,
- the step of providing said user application with an encryption function comprises sending a key index and a symmetric key to said user application,
- the step of reading encrypted display data comprises reading a key index stored in said unprotected GPU memory,
- the step of decrypting said encrypted display data comprises : determining the symmetric key associated in said secure storage area with said read key index and decrypting said encrypted display data with said determined symmetric key.

It enables the secure element, when decrypting an encrypted display data, to know which key has been used for encrypting this data and shall be used for decryption.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to a tamper resistant secure element of an electronic device configured for securing a display of sensitive data on a display device,
said display being triggered by a user application executed by a central processing unit of said electronic device and calling a display function of a graphics library,
said tamper resistant secure element being configured for performing :
- accesses to a unprotected GPU memory, accessible also by the central processing unit and a graphics processing unit,
- accesses to a protected GPU memory only also accessible by the graphics processing unit, and
- the steps of the method according to the first aspect of the invention.

Using such a tamper resistant secure element for performing decryption enables to protect decryption keys and algorithm against any physical attack.

The tamper resistant secure element according to the third aspect may comprise a secure storage area storing key indexes associated to symmetric keys and may be configured for performing the steps of the method according to the first aspect.

According to a fourth aspect, this invention relates to an electronic device configured for securing a display of sensitive data on a display device and comprising:
- a graphics processing unit,
- a central processing unit,
said display being triggered by a user application executed by said central processing unit and calling a display function of a graphics library,
- a tamper resistant secure element according to the third aspect of the invention,
- an unprotected GPU memory accessible by the graphics processing unit, the secure element and the central processing unit,
- a protected GPU memory only accessible by the graphics processing unit and by the secure element.

Said tamper resistant secure element may be integrated in said graphics processing unit.

The electronic device according to the fourth aspect may comprise further a secure storage area storing key indexes associated to symmetric keys and may be configured for performing the steps of the method according to the first aspect.

Said secure storage area may be comprised in a non-volatile memory of the electronic device.

The protected GPU memory may be a dedicated memory chip physically separated from the unprotected GPU memory, or may be comprised in the unprotected GPU memory and have specific access rights.

It enables to prevent the CPU from accessing the protected GPU memory, in order to avoid any attack by an application running on the CPU.

Said secure storage area may be separate from the tamper resistant secure element.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to the present invention;
- Figure 2 is a schematic illustration of a usual method for displaying of data;
- Figure 3 is a schematic illustration of a method for securing a display of sensitive data according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

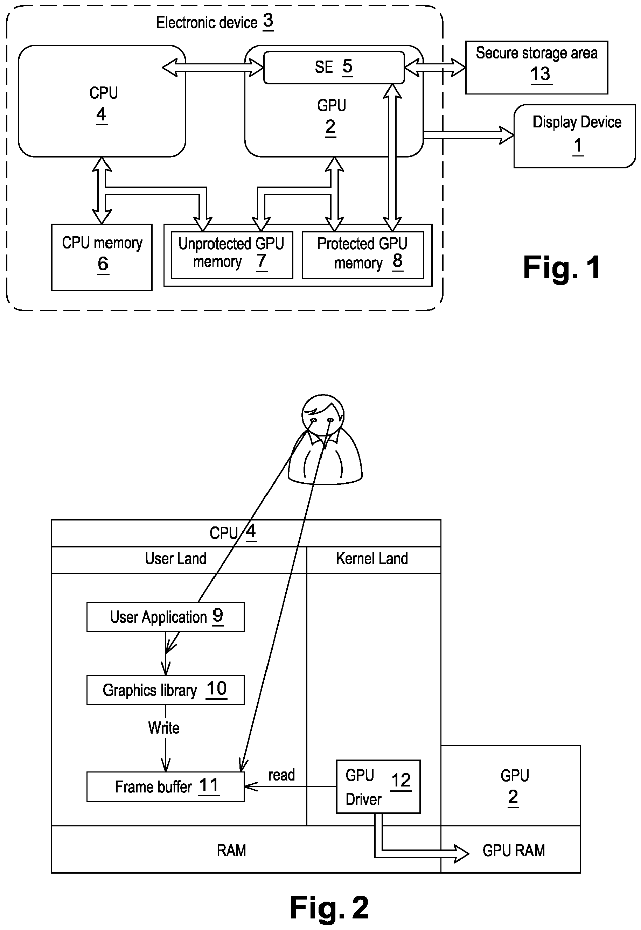

The invention aims at securing the display of sensitive data on a display device 1 by a graphics processing unit (GPU) 2 of an electronic device 3. As shown on **Figure 1****,** the electronic device comprises, in addition to the GPU 2, a central processing unit (CPU) 4. The CPU and the GPU are preferably located on different chips. Such an electronic device may be of any kind of device including a dedicated GPU, such as a desktop or laptop computer, a smartphone, a tablet, a set-top box, a multimedia audio-video receiver or a video player. The display device 1 may be integrated in the electronic device 3, such as the screen of a laptop or smartphone, or it may be an external device, such as a screen or a video projector connected to the video output of the electronic device.

In order to protect sensitive data to be displayed by the GPU against unauthorized access, the invention relies on an encryption of the display data provided to the GPU. Since encryption and decryption data may require heavy calculation, it may have an impact on display performances of the electronic device if this task is performed by the GPU. In order to avoid such an impact, the electronic device comprises a secure element SE 5 which is in charge of managing encryption and decryption of the sensitive data to be displayed by the GPU. Such a secure element shall at least have the capability of decrypting encrypted sensitive data to be displayed, for example using a cryptoprocessor included in the secure element SE, and to provide encryption function to the CPU. It is tamper resistant in order to resist any physical attack aiming at recovering information about the data processed by the secure element SE, such as side-channel analysis attacks, fault-injection attacks or invasive attacks.

The secure element may be integrated in the GPU chip. In that case the GPU is a System on chip (SoC) having functionalities of both a traditional GPU and of the secure element. Alternatively, the secure element may be a dedicated chip separated from the GPU chip.

The electronic device 3 also comprises a CPU memory 6, such as a RAM memory, to which the CPU may perform accesses for reading and writing data.

The electronic device also comprises an unprotected GPU memory 7 and a protected GPU memory 8.

The unprotected GPU memory 7 is used by the CPU for storing any display data to be displayed by the GPU. Thus it shall be accessible by both the CPU and the GPU. In order to protect sensitive data to be displayed by the CPU, such sensitive data shall, according to the invention, be stored in the unprotected GPU memory under an encrypted form. In order to allow a decryption of such encrypted data by the secure element 5, the unprotected GPU memory shall also be accessible by the secure element 5. The unprotected GPU memory may be any kind of GPU RAM.

The protected GPU memory may be used for storing temporarily the decrypted display data obtained by the secure element, before it is read by the GPU for displaying it on the display device. As a result the protected GPU memory shall be accessible by the GPU and the secure element SE. In order to protect the decrypted data against any access by any application running on the CPU, the protected GPU memory shall be accessible only by the GPU and the secure element SE. It shall not be accessible by the CPU. The protected GPU memory may be a specific part of the unprotected GPU memory, with specific access rights. Alternatively, it may be a dedicated memory chip, physically separated from the unprotected GPU memory, connected only to the GPU and the secure element SE. Such specific access rights may be enforced for example by a MPU (memory protection unit) or by a MMU (memory management unit) with memory protection features. If the secure element is a chip independent from the GPU, the bus used for communication between the secure element and the protected GPU memory shall be protected against eavesdropping, for example by scrambling the data transmitted on that bus.

For an even better protection, the protected GPU memory may also be a tamper resistant memory.

The following paragraphs describe more precisely how the data to be displayed are processed in the electronic device up to their display by the GPU. They also describe the steps of the method according to the invention for protecting sensitive data to be displayed against any unauthorized access.

As shown on **Figure 2****,** the display of sensitive data may be triggered by a user application 9 executed by the CPU of the electronic device. **Figure 2** shows a process of displaying data performed without any specific protection, as it may be performed by a usual computer system. In order to get such sensitive data displayed by the GPU, the user application may call a display function of a graphics library 10. Such a display function, also executed by the CPU, may encode the data provided by the user application under a specific picture or video format and obtain display data to be provided to the GPU.

The display function then writes the obtained display data in a frame buffer 11 where it can be read by a GPU driver 12 of the electronic device. This GPU driver reads the display data in the frame buffer and copies it in the unprotected GPU memory of the GPU, in order to make it accessible by the GPU.

As shown on Figure 2, using such a process makes the sensitive data vulnerable to an attack by a hacker which could access it either by eavesdropping the communication between the user application and the graphics library (man in the middle attacks) or by reading it in the frame buffer. In both cases it would enable an attacker to replace the data to be displayed by other data, by writing such rogue display data in the frame buffer.

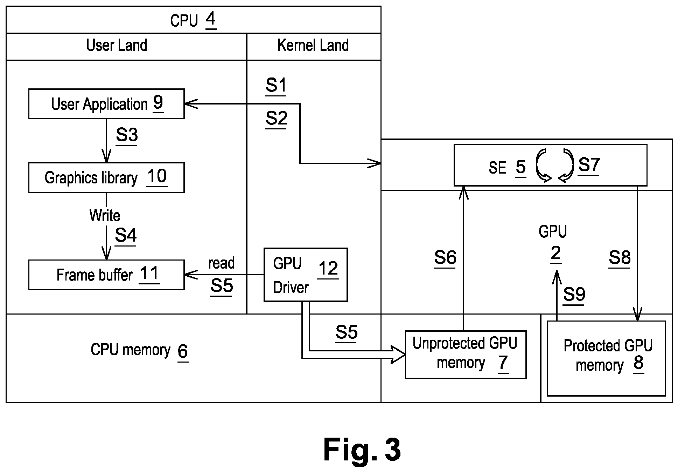

**Figure 3** shows how sensitive data to be displayed shall be processed according to a first aspect of the invention for protecting it against such attacks.

In a first step S1, the user application wishing to display some data sends the secure element a request for encryption. Such a request warns the secure element that the user application has some sensitive data to be encrypted before being sent to the graphics library. In a linux environment such a request may for example be issued by the user application as a system call to the kernel, which then transmits the request to the secure element.

In a second step S2, the secure element provides the user application with an encryption function enabling the user application to encrypt sensitive data to be displayed. The secure element may return the encryption function itself or it may return a pointer to the location of this encryption function in the memory. By doing so, the user application doesn't need to have knowledge of the encryption key used by the encryption function. Such an encryption function may be specified as an encryption algorithm such as AES and a cryptographic key to be used with this algorithm for encrypting the sensitive data to be protected.

In a third step S3, the sensitive data is encrypted by the CPU using the encryption function provided by the secure element, producing encrypted sensitive data, and the obtained encrypted sensitive data is transmitted to the graphics library for performing a display function on it.

In a fourth step S4, the display function of the graphics library processes the encrypted sensitive data and generates encrypted display data from it, and writes the generated encrypted display data in the frame buffer.

In a fifth step S5, the GPU driver executed by the CPU reads the encrypted display data in the frame buffer and copies it in the unprotected GPU memory.

Up to this step, the data to be displayed have remained encrypted and therefore protected against any attack.

In a sixth step S6, the secure element reads, in the unprotected GPU memory, the encrypted display data, and, in a seventh step S7, decrypt it, obtaining decrypted display data.

In an eighth step S8, the secure element writes the decrypted display data in the protected GPU memory.

In an ninth step S9, the GPU accesses said decrypted display data in the protected GPU memory and displays it on the display device.

In the case of encryption of the sensitive data using symmetric keys, such as AES keys, each encrypted sensitive data may be encrypted using a different key and the secure element needs a way to know which key has been used for encrypting which data, in order to retrieve the correct key for decrypting the data. The electronic device may comprise a secure storage area 13 storing key indexes associated to symmetric keys. Such a secure storage area may be integrated in the secure element or it may be separate from it and comprised in a non-volatile memory NVM of the electronic device.

In that case, during the second step S2, in order to provide the user application with an encryption function, the secure element may send a key index and an associated symmetric key to the user application. During the third step S3, this key index shall be provided to the graphics library, which shall during the fourth step S4 write the key index in the frame buffer along with the encrypted display data. In the fifth step S5, the key index shall be written to the unprotected GPU memory. In the sixth step S6, the secure element may read the key index stored in the unprotected GPU memory. In the seventh step S7, the secure element may then determine the symmetric key associated in said secure storage area with the read key index and decrypt the encrypted display data with the determined symmetric key.

According to a second aspect, the invention relates to a computer program product directly loadable into the memory of at least one computer, comprising software code instructions for performing, when said product is run on the computer, the steps of the method described here before.

According to a third aspect, the invention relates to the tamper resistant secure element SE 5 of the electronic device 3 configured for securing a display of sensitive data on the display device 1,
said display being triggered by the user application 9 executed by the central processing unit CPU 4 of said electronic device and calling a display function of the graphics library 10,
said tamper resistant secure element 5 being configured for performing :
- accesses to the unprotected GPU memory 7, accessible also by the central processing unit (CPU) and the graphics processing unit GPU,
- accesses to a protected GPU memory 8 only also accessible by the graphics processing unit GPU, and
- the steps of the method according to the first aspect of the invention described here before.

According to a fourth aspect, the invention relates to the electronic device 3 configured for securing a display of sensitive data on the display device 1 and comprising :
- the graphics processing unit GPU 2,
- the central processing unit CPU 4,
said display being triggered by the user application 9 executed by said central processing unit CPU and calling a display function of a graphics library 10,
- the tamper resistant secure element SE 5 according to the third aspect of the invention,
- the unprotected GPU memory 7 accessible by the graphics processing unit GPU, the secure element and the central processing unit CPU,
- the protected GPU memory 8 only accessible by the graphics processing unit GPU and by the secure element.

In addition to these features, the computer program according to the second aspect of the invention, the tamper resistant secure element according to the third aspect of the invention and the electronic device according to the fourth aspect of the invention may be configured for performing or may comprise any other features described here before.

Therefore, the proposed method and systems enable to protect the data whose display is triggered by an application against any unauthorized reading or modification up to their display by the GPU with limited computational cost for the CPU and the GPU since decryption is performed by the secure element.

## Claims

1. A method for securing a display of sensitive data on a display device (1) by a graphics processing unit (GPU) (2) of an electronic device (3),
said display being triggered by a user application (9) executed by a central processing unit (CPU) (4) of said electronic device and calling a display function of a graphics library (10),
said electronic device comprising a tamper resistant secure element (SE) (5), an unprotected GPU memory (7) accessible by the graphics processing unit (GPU), the secure element and the central processing unit (CPU) and a protected GPU memory (8) only accessible by the graphics processing unit (GPU) and by said secure element,
said method comprising, performed by said secure element (5), the steps of :
- in response to the triggering of the display of said sensitive data by the user application (9), providing (S2) said user application with an encryption function enabling said user application to encrypt said sensitive data,
- reading (S6), in the unprotected GPU memory (7), encrypted display data generated by said display function of the graphics library from said encrypted sensitive data,
- decrypting (S7) said encrypted display data to generate decrypted display data,
- writing (S8) the decrypted display data in the protected GPU memory (8),
such that the graphics processing unit (GPU) (2) accesses said decrypted display data in the protected GPU memory (8) and displays it on the display device.

2. The method of claim 1, said electronic device comprising further a secure storage area (13) storing key indexes associated to symmetric keys, wherein:
- the step of providing (S2) said user application with an encryption function comprises sending a key index and a symmetric key to said user application,
- the step of reading (S6) encrypted display data comprises reading a key index stored in said unprotected GPU memory,
- the step of decrypting (S7) said encrypted display data comprises : determining the symmetric key associated in said secure storage area with said read key index and decrypting said encrypted display data with said determined symmetric key.

3. A computer program product directly loadable into the memory of at least one computer, comprising software code instructions for performing the steps of claim 1 when said product is run on the computer.

4. A tamper resistant secure element (SE) (5) of an electronic device (3) configured for securing a display of sensitive data on a display device (1),
said display being triggered by a user application (9) executed by a central processing unit (CPU) (4) of said electronic device and calling a display function of a graphics library (10),
said tamper resistant secure element (5) being configured for performing :
- accesses to a unprotected GPU memory (7), accessible also by the central processing unit (CPU) and a graphics processing unit (GPU),
- accesses to a protected GPU memory (8) only also accessible by the graphics processing unit (GPU), and
- the steps of claim 1.

5. The tamper resistant secure element of claim 4 comprising a secure storage area storing key indexes associated to symmetric keys and configured for performing the steps of claim 2.

6. An electronic device (3) configured for securing a display of sensitive data on a display device (1) and comprising :
- a graphics processing unit (GPU) (2),
- a central processing unit (CPU) (4),
said display being triggered by a user application (9) executed by said central processing unit (CPU) and calling a display function of a graphics library (10),
- a tamper resistant secure element (SE) (5) according to claim 4,
- an unprotected GPU memory (7) accessible by the graphics processing unit (GPU), the secure element and the central processing unit (CPU),
- a protected GPU memory (8) only accessible by the graphics processing unit (GPU) and by the secure element.

7. The electronic device of claim 6, wherein said tamper resistant secure element is integrated in said graphics processing unit (GPU).

8. The electronic device of claim 6, comprising further a secure storage area storing key indexes associated to symmetric keys and configured for performing the steps of claim 2.

9. The electronic device of claim 8, wherein said secure storage area is comprised in a non-volatile memory of the electronic device.

10. The electronic device of claim 6, wherein the protected GPU memory is a dedicated memory chip physically separated from the unprotected GPU memory, or is comprised in the unprotected GPU memory and has specific access rights.

11. The electronic device of claim 8, wherein said secure storage area is separate from the tamper resistant secure element.
